# EUROPEAN PATENT APPLICATION

(11) **EP 4 800 052 A1**
(43) Date of publication of application: **02.09.2026**
(21) Application number: 25212414.4
(22) Date of filing: 30.10.2025
(51) Int. Cl.: C08G 65/48, C09D 171/10

(54) **ADHESION PROMOTER COMPOSITIONS CONTAINING BORON AND METHODS THEREOF**

(30) Priority: 26.02.2025 US 202519064304
(71) Applicant: The Boeing Company, Arlington, VA 22202 (US)
(72) Inventor: VAJO, John James, Arlington, 22202 (US); HERN, Zachary Cole, Arlington, 22202 (US); DUSTIN, Ashley Marie, Arlington, 22202 (US); BUI, Phuong Phuc Nam, Arlington, 22202 (US); HOLLRIGEL, Dylan Bryce, Arlington, 22202 (US)
(74) Representative: Harris, Jennifer Lucy

(57) **Abstract**

An adhesion promoter composition includes a species that may include BHₓ and a solvent. Implementations of the adhesion promoter composition may include a method of providing a stable, surface-modified substrate. The adhesion promoter composition may include a surfactant such as an anionic surfactant, a cationic surfactant, or a nonionic surfactant, such as polyethylene glycol p-(1,1,3,3-tetramethylbutyl)-phenyl ether, a crown ether, a polysorbate, or a combination thereof. The adhesion promoter composition may include an activator such as ferric chloride, trimethyl borate, titanium tetrachloride, or a combination thereof. The species including BHₓ or may include ammonia borane, dimethylamine borane, trimethylamine borane, triethylamine borane, dicyclohexylamine borane, ethylenediamine bis-borane, tert-butylamine borane, diphenylphosphine borane, pyridine borane, borohydrides, or a combination thereof.

## Description

### TECHNICAL FIELD

The present teachings relate generally to adhesion promoter compositions a species comprising BHₓ, and a solvent and, more particularly, to adhesion promoter compositions that may be used with polymers such as ketones, and for example, poly-aryl-ether-ketones, and methods for application thereof.

### BACKGROUND

PAEK polymers, in particular, poly-ether-ketone-ketone (PEKK) and poly-ether-ether-ketone (PEEK), are desirable thermoplastics (TPs) for a variety of applications including carbon fiber reinforced polymer (CFRP) composites. Enabling the use of thermoplastics and thermoplastic composites on aircraft or other vehicles provides a multitude of engineering and manufacturing benefits including enhanced rate, thermoformability, and a lack of out-time tracking/freezer storage. The advantageous chemically inert performance attribute of TP composites, however, results in a challenging surface for bonding and finishing.

While abrasive and high-energy surface preparation techniques such as plasma, ultraviolet (UV) and grit blasting can enable bonding of and to TP composites, the resulting high energy surfaces are also relatively unstable and thus relax over time, for example, less than 2 months, during which the beneficial effects of the treatment on bonding are diminished or lost. Additionally, surface treatment methods involving UV radiation or plasma require specialized equipment. The UV and plasma treatments can be invasive to the surface of a substrate and often require precision in tuning and application.

Therefore, it is desirable to provide a rapid, facile adhesion promoter composition capable of producing surface-modified PAEK polymers for bonding and priming/finishing without requiring any surface abrasion, and a method for the surface modification. Additional desirable attributes can include surface modified PAEK polymers that are stable for extended times without degradation, and surface preparation techniques which do not require any specialized equipment.

### SUMMARY

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

An adhesion promoter composition includes a species that may include BHₓ and a solvent. Implementations of the adhesion promoter composition may include a surfactant. The surfactant may include an anionic surfactant, a cationic surfactant, or a nonionic surfactant. The surfactant may include polyethylene glycol p-(1,1,3,3-tetramethylbutyl)-phenyl ether, a crown ether, a polysorbate, or a combination thereof. The adhesion promoter composition may include an activator. The activator may include ferric chloride, trimethyl borate, titanium tetrachloride, or a combination thereof. The species including BHₓ or may include ammonia borane. The species including BHₓ may include dimethylamine borane, trimethylamine borane, triethylamine borane, dicyclohexylamine borane, ethylenediamine bis-borane, tert-butylamine borane, diphenylphosphine borane, pyridine borane, borohydrides, or a combination thereof. The solvent may include water, tetrahydrofuran, 2-phenoxyethanol, methanol, ethanol, isopropanol, dimethyl sulfoxide, acetonitrile, phenols, silanes with hydroxyl groups, glycidyl-containing compounds, dibasic esters, ethers, glycol ethers, or combinations thereof. The solvent may include glycidoxytrimethoxysilane (GTMS). The species including BHₓ may include ammonia borane and the solvent may include 2-phenoxyethanol.

A method of providing a stable, surface-modified substrate can include applying an adhesion promoter composition that may include a species including BHₓ, and a solvent to a surface of a substrate may include a polyaryletherketone (PAEK). The method also includes allowing the adhesion promoter composition to dwell on the surface for about 5 min to about 72 hours. The method also includes removing the adhesion promoter composition from the surface by wiping or rinsing. The method also includes drying the surface of the PAEK. Implementations of the method of providing a stable, surface-modified substrate may include applying a coating to the surface of the substrate. The coating may include an epoxy, a polyurethane, or a polysulfide. Removing the adhesion promoter composition from the surface may include wiping and/or rinsing using a solvent may include methyl ethyl ketone (MEK), methyl propyl ketone (MPK), isopropyl alcohol (IPA), acetone, water, propylene glycol propyl ether (PGPE), or a combination thereof. The method of providing a stable, surface-modified substrate may include heating the adhesion promoter composition up to 100 °C. The surface has a ratio of C-O:C=O that is higher at a surface depth of up to 10 nm as compared to a bulk of the substrate.

A stable, surface-activated polymer surface includes a surface of a substrate that may include a polyaryletherketone (PAEK) and where the stable also includes the surface has a ratio of C-O:C=O that is higher at a surface depth of up to 10 nm as compared to a bulk of the substrate. Implementations of the stable, surface-activated polymer surface includes where the ratio of C-O:C=O remains stable for about 6 months to about 2 years. The polyaryletherketone (PAEK) may include poly-ether-ether-ketone (PEEK) or poly-ether-ketone-ketone (PEKK).

The features, functions, and advantages that have been discussed can be achieved independently in various implementations or can be combined in yet other implementations further details of which can be seen with reference to the following description.

### BRIEF DESCRIPTION OF THE DRAWINGS

The accompanying drawings, which are incorporated in and constitute a part of this specification, illustrate embodiments of the present teachings and together with the description, serve to explain the principles of the disclosure. In the figures:
FIG. 1A depicts an application of a structural component including an exemplary activated PAEK composition applied to an aerospace vehicle. FIG. 1B is an exploded view of a portion of the aerospace vehicle of FIG. 1A, in accordance with the present disclosure.
FIG. 2 is a flowchart illustrating a method of providing a stable, surface-modified substrate, in accordance with the present disclosure.
FIG. 3 is an X-ray photoelectron spectroscopy (XPS) spectrum of a boron region for samples d1a and d1a1 from Example 1, in accordance with the present disclosure.

It should be noted that some details of the figures have been simplified and are drawn to facilitate understanding of the present teachings rather than to maintain strict structural accuracy, detail, and scale.

### DETAILED DESCRIPTION

Reference will now be made in detail to exemplary embodiments of the present teachings, examples of which are illustrated in the accompanying drawings. Wherever possible, the same reference numbers will be used throughout the drawings to refer to the same, similar, or like parts.

The present disclosure provides a composition containing a species comprising BHₓ, and a solvent and method for applying adhesion promoter compositions for abrasion-free bonding of various materials such as ketones, and in specific examples, poly-aryl-ether-ketones, activated poly-aryl-ether-ketones, and methods thereof. The present disclosure herein includes 1) adhesion promoter compositions, 2) stable, surface modified (activated) poly-aryl-ether-ketone (PAEK) polymers and 3) the methods of adhesion promoter application and surface activation. A component of the adhesion promoter composition is a boron hydride (-BHₓ)-containing chemical species solution, in examples, ammonia borane (AB, NH₃-BH₃)-based adhesion promoter composition, which is capable of rapid and facile reduction of ketones, resulting in a modified surface chemical composition containing an increased ratio of carbon-to-oxygen single chemical bonds (C-O) to carbon-to-oxygen double chemical bonds (C=O) relative to the ratio in the bulk, while maintaining shelf stability. The present disclosure also includes the methods of application including but not limited to spray coating and brush coating, and activation parameters, including solvent choice, activation time(s), and activation temperature(s).

PAEK polymers, in particular, poly-ether-ketone-ketone (PEKK) and poly-ether-ether-ketone (PEEK), are desirable thermoplastics (TPs) for a variety of applications including carbon fiber reinforced polymer (CFRP) composites. Enabling the use of thermoplastics, specifically in the aerospace industry such as for use with aircraft, provides a plethora of engineering and manufacturing benefits including lighter weight, sustainability as the material can be remolded and recycled at end of lifecycle, quick cycle times, thermoformability, safety and economic advantages with less touch labor, and a lack of out-time tracking/freezer storage. The advantageous chemically inert performance attribute of TP composites results in a challenging surface for bonding and finishing. The purpose of the composition and methods described herein is to provide 1) a rapid, facile adhesion promoter composition capable of producing 2) surface modified PAEK polymers for bonding and priming/finishing without requiring any surface abrasion (no sanding, no grit blasting) or high-energy treatment (no plasma, no UV) and 3) a method for the surface modification.

While abrasive or high-energy surface preparation techniques (e.g. grit blasting, plasma, UV + chemical activation) can enable bonding of and to TP composites, the resulting high energy surfaces are also relatively unstable and thus relax over time (e.g., < 2 months) during which the beneficial effects of the treatment on bonding are diminished or lost. A key advantage of the adhesion promoter composition and method in the present disclosure is that the surface modified PAEK polymers are stable for extended times (i.e. > 3 months) without degradation. Additionally, surface treatment methods involving UV radiation or plasma require specialized equipment. The UV and plasma treatments are invasive to the surface of the substrate and often require precision in tuning and application. Abrasive and high-energy surface preparation techniques incur additional cleaning steps, higher energy usage, and increase processing times, all of which hinder adoptability of thermoplastics for wider applications.

The composition and methods of the present disclosure could be used for PAEK thermoplastic parts or composites in applications such as 1) structural bonding, including co-bonding, secondary bonding, or repair; and/or 2) surface finishes, including paints, primers, and/or sealants. Example PAEK based material systems include PEKK matrix-based and PEEK matrix-based CFRP composites.

Commercial applications of the present disclosure can further include PEEK-based biomedical implant materials, which are currently limited by insufficient interaction and growth of body cells with the PEEK surface.

The present teachings provide 1) adhesion promoter compositions, 2) stable, surface modified (activated) poly-aryl-ether-ketone (PAEK) polymers and 3) the methods of adhesion promoter application and (surface) activation. In general, PAEKs include polymers with a repeating unit of any sequence of aryl ether fragments (-phenyl-O-phenyl-) and aryl ketone fragments (-phenyl-C(=O)-phenyl-), as shown in Scheme 1A and 1B, respectively. For example, PEKK (poly-ether-ketone-ketone) has a repeating unit of aryl ether / aryl ketone / aryl ketone and PEEK (poly-ether-ether-ketone) has a repeating unit of aryl ether / aryl ether / aryl ketone, as shown in Scheme 1C and 1D, respectively.

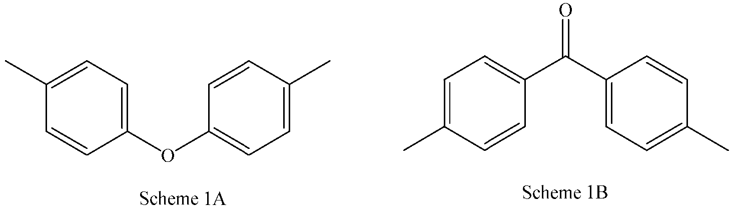

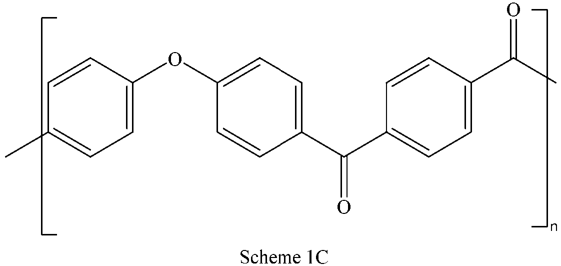

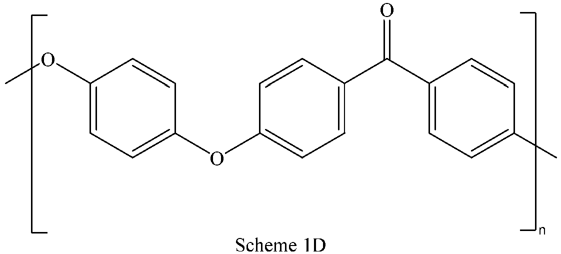

Scheme 1 shows the chemical structure of poly-aryl-ether-ketone (PAEK) polymers. 1A) aryl ether fragment containing 2 C-O bonds; 1B) aryl ketone fragment containing 1 C=O bond; 1C) poly-ether-ketone-ketone (PEKK) repeating unit containing 2 C-O bonds and 2 C=O bonds; 1D) poly-ether-ether-ketone (PEEK) repeating unit containing 4 C-O bonds and 1 C=O bond.

A given sequence of ether and ketone fragments determines the chemical state distribution of carbon atoms in a PAEK polymer. In particular, the chemical state of carbon atoms bonded to oxygen atoms may be defined by N(C-O/C=O), which is the ratio of the number of carbon-to-oxygen single chemical bonds (C-O) to carbon-to-oxygen double chemical bonds (C=O). Each aryl ether fragment contains 2 C-O bonds and each aryl ketone fragment contains 1 C=O bond. As examples, PEKK contains one ether fragment (2 C-O bonds) and two ketone fragments (2 C=O bonds) and thus, N(C-O/C=O) = 1; PEEK contains two ether fragments (4 C-O bonds) and one ketone fragment (1 C=O bond) and thus, N(C-O/C=O) = 4.

These values of N(C-O/C=O) pertain to the bulk composition. They also generally pertain to the surface composition for unmodified polymers. Here, the surface composition refers to a surface layer with a thickness of approximately 5 nanometers to 10 nanometers or less, which is approximately the layer thickness probed by techniques considered to be surface sensitive, such as x-ray photoelectron spectroscopy (XPS) or time-of-flight secondary ion mass spectrometry (TOF SIMS). The bulk composition refers to a layer of approximately 100 nanometers to 1000 nanometers or greater.

The surface modified PAEK polymers of the present teachings, as compared to unmodified polymers, have values of N(C-O/C=O) for a surface layer that are higher than the bulk polymer. The higher values of N(C-O/C=O) for the surface layer are achieved by chemically modifying (specifically, chemically reducing) a portion of the surface C=O bonds to C-OH or COR, where C-OH represents reduction to an alcohol and C-OR represents other possibilities such as C-O-B- or C-O-Si-. Each surface C=O bond that is reduced removes one C=O bond while creating one C-O bond, thereby increasing N(C-O/C=O). For example, reducing 50% of the C=O bonds on the surface of PEKK to C-OH bonds increases N(C-O/C=O) from 1 to 3.

In detail, 2 C-O/formula unit + 2 C=O/formula unit giving N(C-O/C=O) = 1 before modification becomes 3 C-O/formula unit + 1 C=O/formula unit in the surface modified polymer giving N(C-O/C=O) = 3. Similarly, reducing 50% of the C=O bonds on the surface of PEEK increases the number of C-O bonds from 4 to 4.5 and decreases the number of C=O from 1 to 0.5, thus increasing N(C-O/C=O) from 4 to 9.

The surface modified PAEK polymers of the present disclosure may also optionally have an elemental surface composition that contains boron at approximately 0.1 atomic percent, or from about 0.02 atomic percent to about 0.5 atomic percent. The presence of boron is a result of the modification process in which a portion of the surface C=O bonds that are reduced to C-O bonds are not bonded to hydrogen (i.e. C-OH) but instead are bonded to boron or chemical structures containing C-O-B- fragments. Further, when silanes are used as solvents there can be additional C-O-Si- fragments formed.

The chemical activation methods described herein used to produce surface modified PAEK polymers includes a chemical reduction treatment of the PAEK polymer surface using boron hydride (BHₓ)-containing chemical species, wherein x refers to the number of hydrogen atoms in the compound. A specific example of a BHₓ-containing chemical species used in the present disclosure is ammonia borane (AB, NH₃BH₃). Additional examples of BHx containing chemical species include dimethylamine borane, trimethylamine borane, triethylamine borane, dicyclohexylamine borane, ethylenediamine bis-borane, tert-butylamine borane, diphenylphosphine borane, triphenylphosphine borane, morpholine borane, 2-methylpyridine borane, borane-tetrahydrofuran complex, borohydrides, such as NaBH₄, and pyridine borane.

Without being bound by any particular theory, the mechanism underlying this method is believed to be similar to that of amine borane complexes, for example ammonia borane, which are known in the homogeneous-solution-phase organic chemistry literature to serve as mild reducing agents. They are less reactive than their borohydride counterparts (for example, NaBH₄) which allows them to be used in protic solvents, such as water, alcohols, and the like, without quickly decomposing (< 6 hours). In solution, amine borane complexes can reduce solvated substances including nitriles, activated alkenes, ketones, and aldehydes, often without the need for a catalyst. The mechanism of action can differ depending on solvent and reaction conditions, however most reductions occur via a transfer hydrogenation process or through a hydroboration process to produce a borate ester intermediately followed by alcoholysis. While some mechanistic understanding of the solution-state reduction using AB has been demonstrated, it is not obvious the same process/mechanism occurs heterogeneously at a solid/solution interface. A heterogeneous reaction at the PAEK surface would reduce surface C=O functional groups to COR or C-OH functional groups, which are known to be reactive towards many commercial adhesives (epoxy, polyurethane, silicone, etc.) and would increase adhesive strength via covalent bonds between the adhesive polymer network and the PAEK surface. Because the reaction only occurs at the surface, the bulk polymers remain unreacted and maintain desirable thermal and thermomechanical properties.

The BHₓ containing chemical species is utilized by dissolution in an appropriate solvent forming a BHₓ containing chemical species solution. Appropriate solvents include water, tetrahydrofuran, 2-phenoxyethanol (2PE), methanol, ethanol, isopropanol, dimethyl sulfoxide, acetonitrile, phenols, silanes with hydroxyl groups, alkoxy groups, silyl hydride groups, glycidyl groups and amine groups such as (3-glycidyl propyl) tri(m)ethoxy silane, tri(m)ethoxy silane, N-(2-aminoethyl)-3-aminopropyltri(m)ethoxysilane, 3-aminopropylsilanetriol, 3-aminopropyltri(m)ethoxysilane, 3-aminopropyltri(m)ethoxysilane, dibasic esters (DBE), polyethylene glycol PEG with molecular weight from 400-1000, methoxypolyethylene glycol (MeOPEG), ethers, such as diethyl ether, and glycol ethers such as propylene glycol methyl ether (PGME), and propylene glycol n-propyl ether (PGPE). Concentrations of the BHₓ containing species solution can be less than 0.1 wt% to 10 wt% or higher, 2 wt% or 5 wt%. An example is 2 wt% AB dissolved in 2PE.

The boron hydride containing chemical species solution may be applied to the PAEK polymer surface by a variety of methods including but not limited to submersion, dipping, brushing, wiping, spraying, or combinations thereof.

The chemical reduction treatment is carried out for times from approximately 5 minutes or 15 minutes up to 72 hours or longer at temperatures from room temperature up to 95 °C, with higher temperatures needing shorter dwell times. In other examples, approximately 15 °C less than the degradation temperature of the BHₓ species or 10 °C less than the boiling point of the selected solvent can be the maximum temperature of the chemical reduction. Examples include, 30 min at room temperature (25 °C), 3 hours (h) at room temperature, 6 h at room temperature, overnight at room temperature, 72 h at room temperature, 2 h at 60 °C, 15 min at 75 °C, 15 min at 95 °C, 1 h at 60 °C, 6 h at 60 °C, 30 mins at 75 °C, 1 h at 75 °C, 2 h at 75 °C, 5 mins at 95 °C, or 30 mins at 95 °C.

During treatment the surface may be uncovered or covered or contacted to a second surface that is also being treated in a sandwich configuration.

After treatment with the BHₓ containing chemical species solution, the modified PAEK polymer surface is wiped dry. Optionally, the surface is further cleaned with water or appropriate organic solvents such as isopropanol, acetone, methyl ethyl ketone, methyl propyl ketone, propylene glycol propyl ether. Ketones can be used in this step to deactivate any excess BHₓ.

The present method also includes BHₓ containing species solutions that contain an activator, packaged with or added just prior to using. Examples include adding 1 part by weight of 3-glycidoxypropyl-trimethoxysilane as an activator to 1 part by weight of 2 wt% AB in 2PE. Addition of this activator reduces the treatment time at room temperature from 3 h to 30 min. Other examples of activators include 1) DBE and 2) 0.1 moles/liter of FeCl₃ dissolved in 2PE, each used as 1 part by weight with 1 part by weight of 2 wt% AB in 2PE. Other illustrative examples of activators can include TiCl₄, B(OH)₃, B(OMe)₃, Sc(OTf)₃, or B(C₆F₅)₃.

The utility of the compositions and methods of the present disclosure is in applications that require bonding and/or modifying to PAEK polymer surfaces. Most simply, this bonding can be bonding two PAEK polymer surfaces, also referred to as secondary bonding, using for example an epoxy film adhesive. In other examples, bonding PAEK to cured thermoset CFRPs or metals can be accomplished using epoxy adhesives, urethane adhesives, or a combination thereof. Other examples include 1) bonding of a PAEK surface to "green-state" thermoset CFRP during resin curing, also known as co-bonding; 2) surface finishing of a PAEK polymer surface with a primer, paint, or sealant; or 3) the growth of body cells that become attached onto a PAEK surface of a biomedical implant; or 4) a surface modification for improved hydrophilicity; or 5) the modification refers to the surface functionalization to support further surface chemistry/reactivity, for example, tethering groups to change surface energy, etc.

Unmodified PAEK polymer surfaces yield adhesive bonds with low adhesive strength that are unacceptable for most all applications and will not sufficiently adhere primers/finishes. Accordingly, adhesive bond strength tests, such as floating roller peel (FRP), typically give low adhesive strengths with failure at the PAEK surface or adhesive interface, also referred to as adhesion failure. Double cantilever beam (DCB) methods can be used to measure fracture toughness as well. In contrast, bonding to surface modified PAEK polymers described herein yields high adhesive strength bonds. The adhesive strength of the bonds is typically sufficiently high that failure does not occur at the PAEK surface and/or adhesive interface. Rather, failure occurs within the adhesive layer, i.e. cohesive failure, within the bulk of the PAEK polymer or composite, i.e. substrate failure, or on an opposite side of the adhesive that contacts the other substrate, including other materials or untreated PAEKs. Similarly, adhesive strength between finishes and unmodified PAEK surfaces is low enough to prevent the finishes, such as an epoxy primer, from adhering to the surface after any commonly required weathering tests. Surface modified PAEK polymers described herein, on the other hand, not only allow for the adherence of finishes as applied, but continued adherence through a variety of weathering tests such as water submersion and elevated temperature or humidity environments.

In examples, the present method for applying an adhesion promoting composition can be conducted without the use of any external heat. In other examples, the method can be conducted on other PAEK materials, such as PEEK. In other examples, the use of Lewis acid additives as catalysts for reaction can be used, as well as the method being used to bond a first carbon fiber-reinforced polymer (CFRP) to a second carbon fiber-reinforced polymer (CFRP) with an additional adhesive layer.

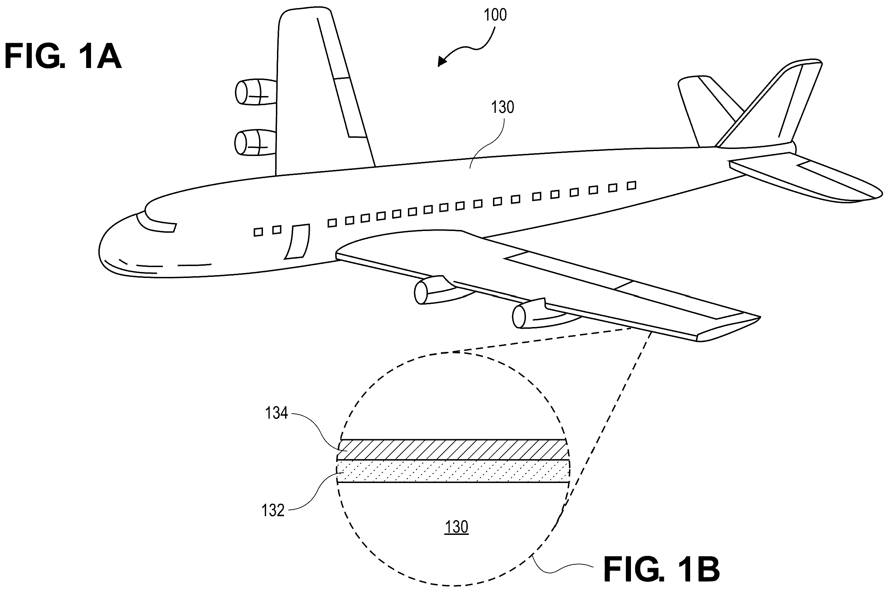

FIG. 1A depicts an application of a structural component including an exemplary activated PAEK composition applied to an aerospace vehicle. FIG. 1B is an exploded view of a portion of the aerospace vehicle of FIG. 1A, in accordance with the present disclosure. An application of the presently disclosed method and composition is shown on an aerospace vehicle 100, whereby vehicle substrate 130 uses the presently disclosed activated PAEK composition or includes an adhesion promoter as described herein. Exploded view FIG. 1B is shown, having vehicle substrate 130 or surface thereof with an optional substrate layer 132 and a sealing layer 134 on a surface of the substrate 130, and/or onto a structural component of or onto a portion of a vehicle. In one example the application of the presently disclosed adhesion promoter composition or activated PAEK component is directed to an external surface of the aerospace vehicle 100. In examples, additional coating layers, such as paints, coatings, or other protective coatings can be applied upon the sealing layer 134, internally or externally. While an exemplary example of an external substrate or surface of the aerospace vehicle 100 is shown herein, it is intended as a nonlimiting example. There may further be other structural applications or areas in an aerospace vehicle 100 or other structure or vehicle where the disclosed compositions may be used.

The adhesion promoter composition of the present disclosure includes a species comprising BHₓ and a solvent. In some examples, the adhesion promoter composition includes a surfactant or an activator. The species comprising BHₓ can include ammonia borane, or alternatively dimethylamine borane, trimethylamine borane, triethylamine borane, dicyclohexylamine borane, ethylenediamine bis-borane, tert-butylamine borane, diphenylphosphine borane, pyridine borane, sodium borohydride, or a combination thereof. The solvent can include water, tetrahydrofuran, 2-phenoxyethanol, methanol, ethanol, isopropanol, dimethyl sulfoxide, acetonitrile, phenols, ethers, glycol ethers, silanes with hydroxyl groups, glycidyl-containing compounds, or combinations thereof. Illustrative solvent examples can include glycidoxytrimethoxysilane (GTMS). The surfactant can include an anionic surfactant, a cationic surfactant, or a nonionic surfactant. Illustrative surfactant examples can include polyethylene glycol p-(1,1,3,3-tetramethylbutyl)-phenyl ether, a crown ether, a polysorbate, or a combination thereof. The activator can include ferric chloride.

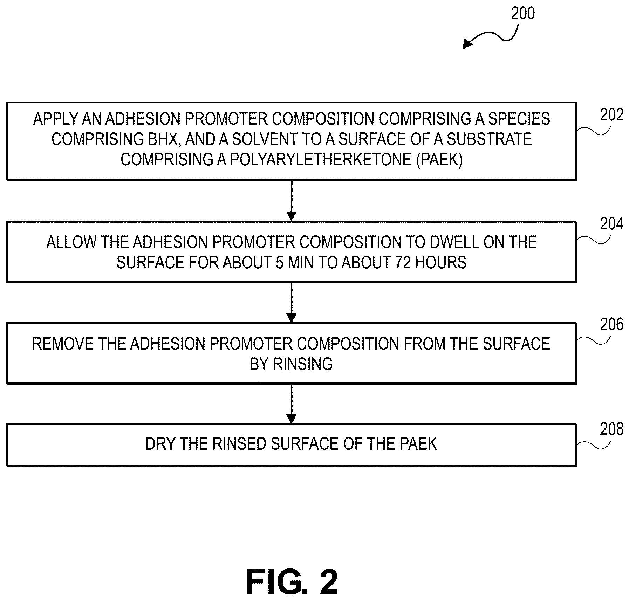

FIG. 2 is a flowchart illustrating a method of providing a stable, surface-modified substrate, in accordance with the present disclosure. The method 200 includes applying an adhesion promoter composition comprising a species comprising BHx, and a solvent to a surface of a substrate comprising a polyaryletherketone (PAEK) 202, allowing the adhesion promoter composition to dwell on the surface for about 5 min to about 72 hours 204, removing the adhesion promoter composition from the surface by rinsing 206, and drying the rinsed surface-modified PAEK surface 208. In examples, the method 200 of providing a stable, surface-modified substrate further includes applying a coating to the surface of the substrate. In examples, the surface can be optionally heated. The coating composition comprises an epoxy, a polyurethane, or a polysulfide in examples. Removing the adhesion promoter composition from the surface can include rinsing using a solvent comprising methyl ethyl ketone (MEK), methyl propyl ketone (MPK), isopropyl alcohol (IPA), acetone, water, propylene glycol propyl ether (PGPE), propylene glycol methyl ether (PGME) or a combination thereof. In examples, THF, ethanol, and other glycol ethers such as propylene glycol methyl ether (PGME) can be used. In other examples, the method 200 of providing a stable, surface-modified substrate can include heating the adhesion promoter composition up to 100 °C or as noted previously. As a result of the method 200 of providing a stable, surface-modified substrate, the surface has a ratio of C-O:C=O that is higher at a surface depth of up to 10 nm as compared to the bulk of the substrate.

Further examples of the adhesion promoter composition can include using ammonia borane (AB) at concentrations between 2 wt% and 5 wt%, or from about 3% to about 4% by weight. Further aspects of the method can include applying multiple coats of the solution for enhanced surface coverage, or employing different BHₓ-containing compounds, such as dimethylamine borane or trimethylamine borane, in combination with AB. Additional examples of the method can include using solvents such as water, tetrahydrofuran, methanol, ethanol, isopropanol, and acetonitrile to dissolve the adhesion promoter composition, treating PAEK surfaces at elevated temperatures up to 95 °C for shorter reaction times or using room temperature treatment for longer dwell periods. The addition of DBE as an activator in a ratio of 1:2 to 5:4 with respect to AB concentration, or FeCl₃ dissolved in water or an alternate carrier solvent (0.1 moles/liter) at the same ratio. The cleaning of one or more surfaces before application by rinsing with acetone followed by water or using mild solvents like isopropanol, or using different coating methods such as submersion for uniform coverage, dipping for controlled thickness, brushing/wiping for localized applications, and spraying for rapid surface treatment can be included in the method. These examples provide a range of options to tailor the adhesion promoter composition and modification process according to specific application requirements.

The optional addition of activators like DBE and FeCl₃ can enhance reactivity in specific environments such as high humidity or low-temperature conditions. In examples, the activator serves to enhance activity (reaction rate) in lower temperature conditions or allow for a shorter treatment time. After treatment with the adhesion promoter solution, it can be helpful to wipe dry using a lint-free cloth or paper towel without applying excessive pressure. Submerging PAEK polymer surfaces in BHₓ-containing chemical species solutions offers a method of surface modification without compromising bulk properties. This process involves immersing the substrate into a solution containing ammonia borane (AB) or other suitable BHₓ compounds, such as dimethylamine borane and trimethylamine borane, dissolved in solvents like water, tetrahydrofuran, 2-phenoxyethanol, methanol, ethanol, isopropanol, dimethyl sulfoxide, acetonitrile, phenols, silanes with hydroxyl groups (e.g., tri(m)ethoxy(silyl)prop-1-en-3-yloxy), and glycidyl-containing compounds. Submersion can be employed when uniform coating coverage across large areas is desired or where precise control over thickness distribution is desired. This method may be employed in various applications such as aerospace for structural bonding, automotive for surface finishing and adhesion promotion, biomedicine for use in implantable devices, tissue engineering scaffolds, consumer products such as adhesive tapes or coatings, construction materials, and the like.

Dipping is one useful method for applying an adhesion promoter composition to PAEK polymer surfaces. This can be conducted with one coat or with multiple coats of the adhesion promoter solution applied sequentially. Dipping can be considered as dipping briefly and removed as compared to submersion meaning leaving an article in the bath. Brushing as an application method for applying the adhesion promoter composition to PAEK polymer surfaces with one or multiple brushes offers advantages with the use of a soft-bristled brush to apply the adhesion promoter composition solution evenly across the surface without creating excessive pressure or scratches. This approach can provide uniform coverage while minimizing potential damage to the underlying material or minimizing the amount of BHₓ solution used.

Spraying is one method for applying the adhesion promoter composition to PAEK polymer surfaces. This technique involves using an atomizer or spray gun to dispense the solution onto the surface in a controlled manner. The choice of nozzle size and shape, as well as the pressure and flow rate of the compressed gas and thus the liquid adhesion promoter stream, may be adjusted depending on the specific application requirements. For example, when spraying large areas with uniform coverage is desired, such as for aerospace applications where bonding multiple components together requires efficient processing times, it may be useful to use a wide-angle nozzle (e.g., 60° or larger) and moderate pressure settings.

Another example involves rinsing the modified surface gently but thoroughly with deionized water at room temperature for a duration of 1-5 minutes, followed by air drying using compressed nitrogen gas flow. Another example involves cleaning the surface with an organic solvent such as isopropanol (IPA) or acetone at room temperature for a duration of 1-5 minutes. In yet another example, the surface may be cleaned using a combination of water and an organic solvent such as IPA or acetone in a 1:2 ratio. In certain examples where high-purity water or organic solvents are not available, it is useful to use alternative cleaning agents such as ethyl acetate, butanone, or cyclohexane. These alternatives may provide similar effectiveness in removing residual reagents. Without being bound to any particular theory, there can be a correlation between PAEK crystallinity and the effectiveness of the rinsing solvents, and in examples, both PEEK and PEKK can be rinsed with any of the solvents noted previously.

### Methods and Examples

The present polymer surface modification process is facile in examples and can be carried out in ambient atmosphere, spanning a wide range of temperature and time without the need for specialized tools. This composition and process may be illustrated by experimental measurements of the N(C-O/C=O) ratio (defined previously) for PAEK polymer surfaces using XPS. Specifically, the XPS photoelectron peak shape for carbon can be fitted to contributions from C-O bonds and C=O bonds, as well as C-C and several other types of carbon bonds. From this fitting, the percentage of C-O and C=O bonds and thereby the N(C-O/C=O) ratio can be determined. This technique is used in the included examples.

The utility described herein may be illustrated by adhesive peel strength testing and crosshatch adhesion testing. Adhesive (peel) strength can be qualitatively assessed by using small samples (ca. 1 inch x 2 inch) bonded to stainless steel mesh (ca. ¾ inch x 3 inch) using epoxy film adhesive and subsequently peeling the mesh off by hand or using pliers to qualitatively assess the adhesion strength and observe the failure mode.

Adhesive (peel) strength can be quantitatively assessed by, but not limited to floating roller peel testing following ASTM D3167 to quantitatively determine an adhesive peel strength as well as observing the failure mode. Mechanical strength (fracture toughness, flexural strength, shear strength) can be quantitatively assessed by, but not limited to, 1) double cantilever beam (DCB) testing, 2) short beam flex (SBF), 3) short beam shear (SBS). Crosshatch adhesion testing can be performed, wherein a carbon fiber reinforced PAEK panel is treated with the adhesion promoter, a finish is applied and cured, optionally subjected to extended weathering conditions, scored with a razor blade in a crosshatch pattern, followed by the application of a tape with at least 60 oz/inch width pull strength. The tape is then pulled off the surface and finish removal is judged visually. Some of these techniques are used in the examples below.

### Example 1. Surface modified PEKK composite.

A PEKK composite (sample d1-Control) was characterized by XPS. Analysis of the carbon chemical state distribution indicated 9% C-O bonds and 6% C=O bonds. Thus, N(C-O/C=O) for this sample was 1.5. This is close to the theoretical bulk value of 1.0 for PEKK, given possible contaminates on the surface and the uncertainties of the XPS technique. Next, the sample was brush coated with 2-phenoxyethanol (2PE, a possible solvent for a BHx containing chemical species solution), which did not contain a dissolved BHx containing chemical species. After coating the surface was 1) covered with a piece of Kapton; 2) heated in an oven at 60 °C for 2 hours; 3) allowed to sit at room temperature overnight; 4) wiped dry; 5) wiped with PGPE; 6) wiped with isopropyl alcohol, and 7) dry wiped (sample d1a). After characterizing the surface by XPS, the same procedure described above was repeated on the same piece of PEKK composite, except that the 2PE contained 2 wt% of dissolved ammonia borane as a BHₓ containing chemical species solution to produce surface modified PEKK composite (sample d1a1).

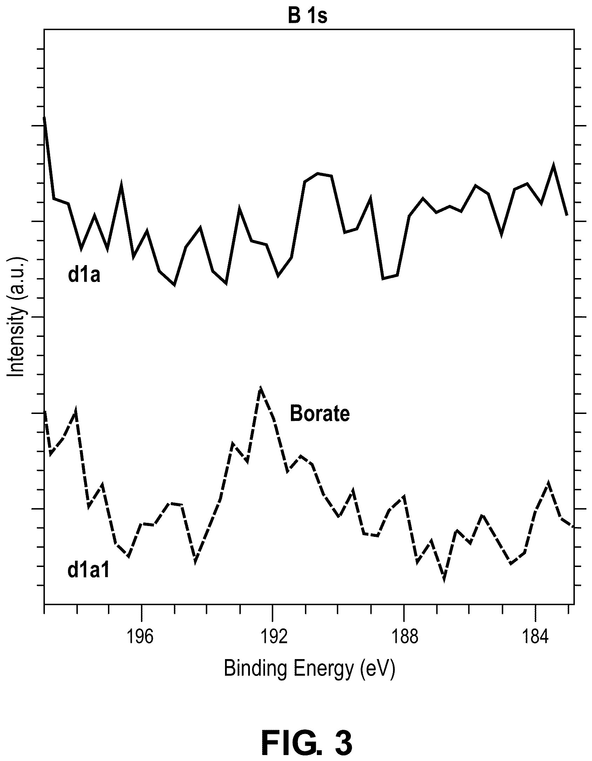

FIG. 3 is an X-ray photoelectron spectroscopy (XPS) spectrum of a boron region for samples d1a and d1a1 from Example 1, in accordance with the present disclosure. XPS analysis of the surface of sample d1a showed 9% C-O bonds and 8% C=O bonds giving N(C-O/C=O) = 1.1. This value (1.1) is lower than before treatment without dissolved BHₓ containing chemical species (1.5) indicating that no surface modification had occurred. It is also close to the theoretical bulk value for PEKK (1.0) suggesting that the processing simply cleaned the surface. In addition, no boron was seen in the XPS spectrum of sample d1a, as shown in FIG. 3. Characterization of sample d1a1 by XPS and analysis showed that the surface contained 19% CO bonds and 2% C=O bonds giving N(C-O/C=O) = 9.5. In addition, a clear boron peak was seen in the XPS spectrum of sample d1a1, as shown in FIG. 3.

A second sample of PEKK composite (sample d2-treated) treated similarly showed 18% C-O bonds and 3% C=O bonds giving N(C-O/C=O) = 6. The N(C-O/C=O) ratio for samples d1a1 and d2-treated are similar given the uncertainties of the XPS technique. The value of N(C-O/C=O) for both samples was increased relative to the bulk value of 1. This characterization confirms samples d1a1 and d2-treated as surface modified PAEK polymers. In addition, the optional presence of boron also confirms the samples as surface modified PAEK polymers.

### Example 2. Counter example: plasma treatment surface modified PEKK and PEEK composites:

The N(C-O/C=O) ratios determined by XPS analyses for PEKK and PEEK composites are show in Table 1 before treatment (control samples PEKK-5C and PEEK-5C) and after plasma treatment (samples PEKK-1P and PEEK-1P). For the PEKK sample, plasma treatment decreased the N(C-O/C=O) ratio from 1.6 to 0.92. Similarly, for the PEEK sample, plasma treatment decreased the N(C-O/C=O) ratio from 3.4 to 1.5. In addition, the plasma treatment also led to the formation of O-C=O and CO₃²⁻ species, indicating that plasma treatment chemically oxidizes the polymer surface. In contrast, the modified surface provided by the composition and method described herein is chemically reduced. These results demonstrate that plasma treatment does not yield a surface modified PAEK polymer according to the present teachings.

**Table 1. XPS results of plasma treated PEKK and PEEK composites.**

| **Sample type (designation)** | **XPS Ratio (C-O / C=O)** | **Comparison to control** |
|---|---|---|
| PEKK Control (PEKK-5C) | 1.6 | - |
| Plasma treated PEKK (PEKK-1P) | 0.92 | Decreased, also O-C=O, and CO₃²⁻ |
| PEEK Control (PEEK-5C) | 3.4 | - |
| Plasma treated PEEK (PEEK-1P) | 1.5 | Decreased, also O-C=O, and CO₃²⁻ |

### Example 3. Adhesion to surface modified PEEK composite.

A 1-inch x 2-inch piece of unmodified PEEK composite (sample 80b) was coated by brushing with a solution 2 wt% ammonia borane (AB) in 2PE. After coating the surface was 1) covered with a piece of Kapton; 2) heated in a hot plate or in alternate examples this can be conducted in an oven at 95 °C for 1 hour; 3) wiped dry; 4) wiped with PGPE; 5) wiped with isopropyl alcohol, and 8) dry wiped. After treatment the surface modified PEEK composite was bonded by 1) pressing a first piece of 3/4 inch x 1 inch Hysol EA9696 epoxy film adhesive (Henkel) onto the center of the sample; 2) covering with a ¾ inch x 3 inch piece of 316 stainless steel wire cloth, 60 x 60 mesh with 0.009 inch openings; 3) pressing a second 3/4 inch x 1 inch piece of Hysol EA9696 epoxy film adhesive into the mesh directly over the first piece; and 4) curing the adhesive according to the manufacturer's instructions at 125 °C for 1.5 h in a vacuum bag under 23 inches Hg vacuum. After curing, peeling the wire cloth by hand from the surface modified PEEK composite was difficult and plyers were used. The wire cloth peeled by ripping out of the epoxy. The peel strength was qualitatively high with cohesive failure within the epoxy adhesive. There was no observed failure at the surface modified PEEK composite or adhesive interface.

### Example 4. Adhesion to PEEK composite: counter example to method.

A 1-inch x 2-inch piece of unmodified PEEK composite (sample 90) was coated by brushing with a solution 5 wt% AB in tetrahydrofuran (THF). After coating, the THF quickly (within ~10 min) evaporated leaving a solid crystalline layer of AB on the PEEK composite surface. Thus, the BHx containing chemical species was not in solution for this sample. The surface was then 1) covered with a piece of Kapton; 2) heated in a hot plate oven or oven at 95 °C for 1 hour; 3) rinsed with deionized water; and 4) wiped dry. After treatment, the sample was bonded by 1) pressing a first piece of 3/4 inch x 1 inch Hysol EA9696 epoxy film adhesive onto the center of the sample; 2) covering with a ¾ inch x 3 inch piece of 316 stainless steel wire cloth, 60 x 60 mesh with 0.009 inch openings; 3) pressing a second 3/4 inch x 1 inch piece of Hysol EA9696 epoxy film adhesive into the mesh directly over the first piece; and 4) curing the adhesive according to the manufacturer's instructions at 125 °C for 1.5 h in a vacuum bag under 23 inches Hg vacuum. After curing, peeling the wire cloth by hand from the PEEK composite was easy. The wire cloth peeled with the epoxy adhesive layer detaching from the polymer surface at the polymer surface / adhesive interface. The peel strength was qualitatively low with adhesion failure. This counter example illustrates the influence of having a method in which a BHₓ containing chemical species is in solution.

### Example 5. Adhesive peel strength of surface modified PEKK composite.

A 4-inch x 6-inch piece of unmodified PEKK composite (sample 121) was coated by spraying using 5 passes with a solution of 2 wt% AB in 2PE. After coating the surface was 1) covered with a piece of Kapton; 2) heated in an oven at 60 °C for 2 hours; 3) wiped dry; 4) wiped with PGPE; 5) wiped with isopropyl alcohol, and 8) dry wiped. After treatment, the surface modified PEKK composite was adhesively bonded in a configuration suitable for floating rolling peel (FRP) testing following ASTM D3167 by 1) pressing a 3-inch x 3.5-inch piece of Hysol EA9696 epoxy film adhesive onto the treated composite surface leaving a ½ inch gap at one end of the length and 2 inch gap at the other end; 2) covering the 2 inch gap with a piece of Kapton film (to serve as a crack starter); 3) pressing a 3.5 inch x 7 inch piece of 20 mil thick anodized 2024 Al over the sample with a 1 inch overhang beyond the Kapton film crack starter; and 4) curing the adhesive according to the manufacturer's instructions at 125 °C for 1.5 h in a vacuum bag under 23 inches Hg vacuum. After curing, the sample was cut into three ½ inch wide strips while discarding both edges. The strips were tested for peel strength using an Instron. The measured adhesive peel strengths were 73.6 lbf/in-width, 76.8 lbf/in-width, and 86.6 lbf/in-width for the three pieces, giving an average of 79.0 ± 4.5 lbf/in-width. This value is high and nearly equal to the manufacturers stated strength of the adhesive of 80 lbf/in-width. In addition, visual inspection of the peeled pieces showed that the failure was cohesive within the adhesive. This example quantitatively illustrates the utility of the present disclosure.

### Example 6. Adhesive peel strength of surface modified PEKK composite: counter example to method.

A 4-inch x 6-inch piece of unmodified PEKK composite (sample 222) was coated by brushing with a solution of 2 wt% AB in 2PE. After coating the surface was 1) covered with a piece of Kapton; 2) held with the BHx solution in contact with the polymer surface at room temperature (~20 °C) for 3 hours; 3) wiped dry; 4) wiped with PGPE; 5) wiped with isopropyl alcohol, and 8) dry wiped. After treatment, the sample was bonded and tested using the procedure described in Example 4. The peeled strips showed regions of approximately 20% to 50% of the peel area that displayed adhesion failure at the polymer surface / adhesive interface. This counter example illustrates that the treatment time was insufficient to achieve acceptable bonding.

### Examples 7 to 23. Use of ammonia borane as BHₓ containing species in solution.

These examples followed the procedure described in Example 4. The results, shown in the table below, illustrate the variety of treatment times and temperatures (examples 6 - 12); methods of application (examples 6, 14 and 14); solvents for ammonia borane (examples 17 - 21); and an alternative adhesive (example 22) that yield high peel strength bonds with cohesive failure. They also show that 1) a surface modified PEKK surface can be bonded 3 months after treatment (example 15) with high adhesive peel strength and without adhesion failure; and 2) that a 2% AB solution in PE can be used 3 months after preparation and storing at room temperature (example 16).

**Table 2. Results of Floating Roller Peel Tests (Examples 7 to 23)**

| **Example #** | **Experiment #** | **Treatment solution (%AB/ solvent)** | **Application Method** | **Treatment Temperature and Time** | **Floating Roller Peel Strength (Lbf/in-width)** | **Failure Mode** |
|---|---|---|---|---|---|---|
| | | | | | | |
| *2% AB*/*2PE - varying temperature and dwell time of treatment* | | | | | | |
| 7 | 102-PEEK | 2% AB/2PE | Pipet | 95C 1h | 61.1 ± 11.8 | Cohesive |
| 8 | 224-PEKK | 2% AB/2PE | Pipet | 60C 1h | 65.5 ± 4.1 | Cohesive |
| 9 | 134-PEKK | 2% AB/2PE | Pipet | 60C 2h | 65.3 ± 2.4 | Cohesive |
| 10 | 223-PEKK | 2% AB/2PE | Pipet | 40C 2h | 62.6 ± 6.9 | Cohesive |
| 11 | 236-PEKK | 2% AB/2PE | Brush | 75C 15min | 63.0 ± 5.3 | Cohesive |
| 12 | 233-PEKK | 2% AB/2PE | Brush | RT 6h | 69.8 ± 3.4 | Cohesive |
| 13 | 170-PEKK | 2% AB/2PE | Brush | RT overnight | 55.8 ± 6.8 | Cohesive |

| *2% AB*/*2PE - Spraying application, EA9696 adhesive* | | | | | | |
|---|---|---|---|---|---|---|
| 14 | 292-PEKK | 2% AB/2PE | Spray - 5 passes | RT 6h | 74.9 ± 2.6 | Cohesive |
| 15 | 280-PEKK | 2% AB/2PE | Spray - 15 passes | RT 6h | 72.6 ± 5.0 | Cohesive |

| *2% AB*/*2PE - Shelf-life of treated surface - 3 month aged, EA9696 adhesive* | | | | | | |
|---|---|---|---|---|---|---|
| 16 | 183-PEKK | 2% AB/2PE | Brush | 60C 2h | 62.7 ± 4.8 | Cohesive |

| *2% AB12PE - Shelf-life of AB solution - 3 month aged, EA9696 adhesive* | | | | | | |
|---|---|---|---|---|---|---|
| 17 | 241-PEKK | 2% AB/2PE | Brush | 60C 2h | 61.4 ± 8.9 | Cohesive |

| *AB in other solvents, EA9696 adhesive* | | | | | | |
|---|---|---|---|---|---|---|
| 18 | B0198-P28A | 5% AB/THF | Pipet | RT overnight | 75.9 ± 2.5 | Cohesive |
| 19 | 122-PEKK | 1% AB/PEG400 | Brush | 60C 2h | 73.4 ± 1.3 | Cohesive |
| 20 | 123-PEKK | 2% AB/MeOPEG500 | Brush | 60C 2h | 78.6 ± 1.0 | Cohesive |
| 21 | 267-PEKK | 5% AB/GTMS | Brush | RT 30min | 80.6 ± 9.4 | Cohesive |
| 22 | 268-PEKK | 5% AB/DBE | Brush | RT 30min | 68.7 ± 10.4 | Cohesive |

| *2% AB12PE - AF163-2 adhesive* | | | | | | |
|---|---|---|---|---|---|---|
| 23 | 134-PEKK | 2% AB/2PE | Brush | 60C 2h | 65.3 ± 2.4 | Cohesive |

### Example 24. Use of ammonia borane as BHₓ containing species in solution with an added activator.

A solution of 2 wt% AB in 2PE was prepared. Separately, a solution of 0.08 moles/liter of FeCl₃ in 2PE was prepared as an activator. Just prior to use, 1 part of the AB solution was mixed with 1 part of the activator solution. This yielded a 2PE solution with 1 wt% AB and 0.04 moles/liter of FeCl₃. Next, a 1 inch x 2 inch piece of unmodified PEKK composite (sample 284) was coated by brushing with mixed AB / activator solution. After coating, the surface was 1) held uncovered at room temperature (~20 °C) for 30 minutes; 2) wiped dry; 3) wiped with methylethyl-ketone and 4) dry wiped. After treatment the surface modified PEKK composite was adhesively bonded by 1) pressing a first piece of 3/4 inch x 1 inch Hysol EA9696 epoxy film adhesive onto the center of the sample; 2) covering with a ¾ inch x 3 inch piece of 316 stainless steel wire cloth, 60 x 60 mesh with 0.009 inch openings; 3) pressing a second 3/4 inch x 1 inch piece of Hysol EA9696 epoxy film adhesive into the mesh directly over the first piece; and 4) curing the adhesive according to the manufacturer's instructions at 125 °C for 1.5 h in a vacuum bag under 23 inches Hg vacuum. After curing, peeling the wire cloth by hand from the surface modified PEKK composite was difficult and plyers were used.

The wire cloth peeled by ripping out of the epoxy. The peel strength was qualitatively high with cohesive failure within the epoxy adhesive. There was no adhesion failure at the surface modified PEKK composite / adhesive interface. In contrast to Example 5 (2 wt% AB/2PE at room temperature for 3 hours, which displayed adhesion failure), this example (1% AB/2PE at room temperature for 30 min) illustrates the utility of including an activator such as FeCl₃.

### Example 25. Use of borohydrides (NaBH₄) as BHₓ containing species in solution.

This example followed the procedure in Example 2 using PEKK composite. The BHₓ containing species in solution was 5 wt% NaBH₄ dissolved in deionized water with 1 wt% Triton-X100, added to improve the wetting of the solution on the composite surface.

Treatments were performed on 2 pieces. The first (sample 76) was treated at room temperature for 16 hours (overnight). The second (sample 77) was treated at 95 °C for 1 hour and then left at room temperature overnight. Both pieces were qualitatively difficult to peel and showed cohesive failure within the epoxy adhesive.

### Example 26. Use of dimethylamine borane as a BHₓ containing species.

This example followed the procedure in Example 2 using PEKK composite. A solution of 5 wt% dimethylamine borane (DMAB) in tetrahydrofuran (THF) was prepared and applied to the composite surface. After ~5 min at room temperature, the THF evaporated. The sample (sample 26) was then heated to 45 °C until the DMAB melted. It was then cooled and left at room temperature overnight. Peeling showed cohesive failure with the epoxy adhesive.

### Example 27: Generalized method of adhesion promoter usage for enhanced finishes adhesion.

A solution of 2 wt% ammonia borane (AB) in 2-phenoxyethanol (2PE) was prepared through magnetic mixing under ambient conditions. The solution was then brushed onto the surface of a clean, unmodified PEKK composite and allowed to dwell for 12 hours in ambient conditions. After 12 hours had elapsed, the panel was wiped clean using PGPE and PGPE-based solvent gels, until no residue was left. The now modified panel was then sprayed with epoxy-based primer, DeSoto 512X310 Urethane Compatible Chrome-Free Epoxy Primer from PPG Aerospace (further referenced as DeSoto), and cured according to the relevant product specifications. Once cured, the panels were subjected to crosshatch adhesion testing. The panel was scored in a crosshatch pattern, 3M Tape No. 250 was applied over the scoring and subsequently removed to reveal any failed DeSoto adhesion. After visual assessment, the panel was submerged in deionized water for 7 days at ambient conditions, dried, scored, and adhesion tested in the same manner on a different location on the same panel. Finally, the panel was subjected to condensing humidity testing for 30 days, where it was held at 49 °C and 100% relative humidity. The crosshatch adhesion testing was conducted for one final time in another untested spot on the same panel after the 30 days had elapsed. The following tables indicate the solvent and relevant AB concentrations used in specific examples, treatment conditions, and adhesion performance.

**Table 3: Example 27 treatment solutions**

| **Name** | **AB1** | **AB2** | **AB3** | **AB4** |
|---|---|---|---|---|
| Solvent | 2-PE | THF | PEG400 | MeOPEG500 |
| Ammonia Borane loading level (wt%) | 2 | 5 | 1 | 2 |

**Table 4: Results of adhesion to primers and finishes (see Example 27 and Table 3) using the surface modified PAEK**

| | **Examples** | | | | | | **Counter Examples** | |
|---|---|---|---|---|---|---|---|---|
| **Name** | **AB1** | **AB1** | **AB2** | **AB3** | **AB3** | **AB4** | **Control** | **UV Only** |
| Treatment Conditions | 12 hours, room temperature | 60°C, 2 hours | 4 hours, room temperature (THF evaporated) | 60°C, 2 hours | 12 hours, room temperature | 12 hours, room temperature | No Treatment | 600 kJ/m² UV exposure |
| Post cured Crosshatch Adhesion | Pass | Pass | Pass | Pass | Pass | Pass | Fail | Pass |
| Post 7 Day DI Water Submersion Crosshatch Adhesion | Pass | Pass | Pass | Pass | Pass | Pass | Fail | Fail |
| Post 30 day condensing humidity crosshatch adhesion | Pass | Pass | Not Tested | Minimal Lift off | Not tested | Not tested | Fail | Fail |

Additional aspects of the present disclosure include an adhesion promoter composition to modify PAEK-based polymers comprised of a BHₓ containing species, a solvent, an optional activator, and an optional surfactant. The BHₓ containing species can be ammonia borane (AB, NH₃BH₃), dimethylamine borane, trimethylamine borane, triethylamine borane, dicyclohexylamine borane, ethylenediamine bis-borane, tert-butylamine borane, diphenylphosphine borane, triphenylphosphine borane, morpholine borane, 2-methylpyridine borane, borane-tetrahydrofuran complex, pyridine borane, borohydrides such as NaBH₄, and mixtures thereof. The solvent, optional activator, and optional surfactant does not contain ketone, imide, phthalonitrile, and/or anhydride functionality. The solvent can include water, tetrahydrofuran, 2-phenoxyethanol (2PE), methanol, ethanol, isopropanol, dimethyl sulfoxide, acetonitrile, phenols, silanes with hydroxyl groups, alkoxy groups, silyl hydride groups, glycidyl groups and amine groups such as (3-glycidyl propyl) tri(m)ethoxy silane, tri(m)ethoxy silane, N-(2-aminoethyl)-3-aminopropyltri(m)ethoxysilane, 3-aminopropylsilanetriol, 3-aminopropyltri(m)ethoxysilane, 3-aminopropyltri(m)ethoxysilane, dibasic esters (DBE), polyethylene glycol PEG with molecular weight from 400-1000, methoxypolyethylene glycol (MeOPEG), ethers, glycol ethers, propylene glycol n-propyl ether (PGPE), and mixtures thereof. Exemplary examples of the optional activator can be 3-glycidoxypropyl-trimethoxysilane, FeCl₃, TiCl₄, B(OMe)₃, B(OH)₃, DBE, N-(2-aminoethyl)-3-aminopropyltri(m)ethoxysilane, 3-aminopropylsilanetriol, 3-aminopropyltri(m)ethoxysilane, 3-aminopropyltri(m)ethoxysilane, and mixtures thereof. In examples, the optional surfactant can be anionic, cationic, or nonionic, for example, Triton X-100, a crown ether, a polysorbate, and mixtures thereof. The concentration of the BHₓ containing species in the solvent is from about 0.1 wt% to about 50 wt%, or from about 0.5 wt% to about 10 wt%, or from about 1 wt% to about 5 wt%. In examples of the adhesion promoter composition, it includes about 2 wt% AB in 2PE. The adhesion promoter composition can be applied to a PAEK surface via submersion, dipping, brushing, wiping, spraying, or a combination thereof. The adhesion promoter composition can be applied and activated under ambient conditions. Alternatively, the adhesion promoter composition can be heated up to 100 °C or as indicated previously before, during or after application. The adhesion promoter composition can be applied to the surface and allowed to dwell for about 5 min to about 72 hours, or from about 10 min to about 8 h. The adhesion promoter composition can be removed from the surface after application and activation via wiping, rinsing, and/or drying prior to bonding a subsequent coating to the surface. The rinsing solvents can include MEK, MPK, IPA, acetone, water, PGPE, and mixtures thereof. The adhesion promoter composition can be used to promote bonding to epoxy-based/containing coatings/adhesives/substrates, polyurethane-based/containing coatings/adhesives/substrates, polysulfide-based/containing coatings/adhesives/substrates, any other hydroxyl-reactive polymer adhesive/coating, or combinations thereof. The adhesion promoter composition can be provided or supplied as a pre-mixed solution, or as a 2-part kit, where the pre-mixed solution has a shelf life of about 3 months, about 6 months, about 12 months, or about 24 months. The 2-part kit can have a shelf life once mixed of about 1 day, about 1 week, about 1 month, about 3 months, about 6 months, or about 12 months. The adhesion promoter composition can enable secondary bonding of PAEK-based thermoplastic substrates and/or composites to PAEK-based thermoplastic substrates and/or composites for aerospace applications, or enable secondary and cobonding of PAEK-based thermoplastic substrates and/or composites to thermoset substrates and/or composites for aerospace applications. Furthermore, the adhesion promoter composition can enable bonding of primers and finishes to PAEK-based thermoplastic surfaces/substrates and/or composites for aerospace applications, bonding of cells to PAEK-based biomedical implants/devices, or surface modification of PAEK-based substrates and/or composites. In examples, the surface modification can include tethering functional groups to the surface to alter hydrophobicity, hydrophilicity, or surface energy.

Additional aspects of the present disclosure provide an environmentally stable surface modified PAEK polymer substrate and/or composite containing ratios of carbon-to-oxygen single chemical bonds (C-O) to carbon-to-oxygen double chemical bonds (C=O) at the surface that are higher than the ratio in the bulk, and optionally contain boron and/or silicon at the surface. The C=O bonds can be included in or due to ketone functionality at the surface. The C-O can be in the form of C-O-R where R is H, groups containing B, groups containing Si, or other hydrocarbon groups. The surface modified PAEK polymer substrate and/or composite can be stable in ambient conditions for about 1 day, about 1 week, about 1 month, about 3 months, about 6 months, about 9 months, about 12 months, or about 2 years. The disclosed method of creating stable, surface modified PAEK polymer substrates and/or composites can include treating the surface with a BHₓ adhesion promoter, allowing the adhesion promoter to dwell, and/or removing the adhesion promoter.

While the present teachings have been illustrated with respect to one or more implementations, alterations and/or modifications may be made to the illustrated examples without departing from the scope of the appended claims. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, with a true scope of the present teachings being indicated by the following claims.

### Clauses

1. An adhesion promoter composition, comprising:
   a species comprising BHₓ; and
   a solvent.
2. The adhesion promoter composition of clause 1, further comprising a surfactant.
3. The adhesion promoter composition of clauses 1 or 2, further comprising an activator.
4. The adhesion promoter composition of clauses 1-3, wherein the species comprising BHₓ comprises ammonia borane.
5. The adhesion promoter composition of clauses 1-3, wherein the species comprising BHₓ comprises dimethylamine borane, trimethylamine borane, triethylamine borane, dicyclohexylamine borane, ethylenediamine bis-borane, tert-butylamine borane, diphenylphosphine borane, pyridine borane, borohydrides, or a combination thereof.
6. The adhesion promoter composition of clauses 1-5, wherein the solvent comprises water, tetrahydrofuran, 2-phenoxyethanol, methanol, ethanol, isopropanol, dimethyl sulfoxide, acetonitrile, phenols, silanes with hydroxyl groups, glycidyl-containing compounds, dibasic esters, ethers, glycol ethers, or combinations thereof.
7. The adhesion promoter composition of clause 6, wherein the solvent comprises glycidoxytrimethoxysilane (GTMS).
8. The adhesion promoter composition of clauses 2-7, wherein the surfactant comprises an anionic surfactant, a cationic surfactant, or a nonionic surfactant.
9. The adhesion promoter composition of clause 8, wherein the surfactant comprises polyethylene glycol p-(1,1,3,3-tetramethylbutyl)-phenyl ether, a crown ether, a polysorbate, or a combination thereof.
10. The adhesion promoter composition of clauses 3-9, wherein the activator comprises ferric chloride, trimethyl borate, titanium tetrachloride, or a combination thereof.
11. The adhesion promoter composition of clauses 1-4 or 6-10, wherein the species comprising BHₓ comprises ammonia borane and the solvent comprises 2-phenoxyethanol.
12. A method of providing a stable, surface-modified substrate, comprising:
   applying an adhesion promoter composition comprising a species comprising BHₓ, and a solvent to a surface of a substrate comprising a polyaryletherketone (PAEK);
   allowing the adhesion promoter composition to dwell on the surface for about 5 min to about 72 hours;
   removing the adhesion promoter composition from the surface by wiping, rinsing; and
   drying the surface of the PAEK.
13. The method of providing a stable, surface-modified substrate of clause 12, further comprising applying a coating to the surface of the substrate.
14. The method of providing a stable, surface-modified substrate of clause 13, wherein the coating comprises an epoxy, a polyurethane, or a polysulfide.
15. The method of providing a stable, surface-modified substrate of clauses 12-14, wherein removing the adhesion promoter composition from the surface comprises wiping and/or rinsing using a solvent comprising methyl ethyl ketone (MEK), methyl propyl ketone (MPK), isopropyl alcohol (IPA), acetone, water, propylene glycol propyl ether (PGPE), or a combination thereof.
16. The method of providing a stable, surface-modified substrate of clauses 12-15, further comprising heating the adhesion promoter composition up to 100 °C.
17. The method of providing a stable, surface-modified substrate of clauses 12-16, wherein the surface has a ratio of C-O:C=O that is higher at a surface depth of up to 10 nm as compared to a bulk of the substrate.
18. A stable, surface-activated polymer surface, comprising:
   a surface of a substrate comprising a polyaryletherketone (PAEK); and wherein:
   the surface has a ratio of C-O:C=O that is higher at a surface depth of up to 10 nm as compared to a bulk of the substrate.
19. The stable, surface-activated polymer surface of clause 18, wherein the ratio of C-O:C=O remains stable for about 6 months to about 2 years.
20. The stable, surface-activated polymer surface of clauses 18 or 19, wherein the polyaryletherketone (PAEK) comprises poly-ether-ether-ketone (PEEK) or poly-ether-ketone-ketone (PEKK).

## Claims

1. An adhesion promoter composition, comprising:
a species comprising BHₓ; and
a solvent.

2. The adhesion promoter composition of claim 1, further comprising a surfactant.

3. The adhesion promoter composition of claims 1 or 2, further comprising an activator.

4. The adhesion promoter composition of any one of claims 1-3, wherein the species comprising BHₓ comprises ammonia borane; or
wherein the species comprising BHₓ comprises dimethylamine borane, trimethylamine borane, triethylamine borane, dicyclohexylamine borane, ethylenediamine bis-borane, tert-butylamine borane, diphenylphosphine borane, pyridine borane, borohydrides, or a combination thereof.

5. The adhesion promoter composition of any one of claims 1-4, wherein the solvent comprises water, tetrahydrofuran, 2-phenoxyethanol, methanol, ethanol, isopropanol, dimethyl sulfoxide, acetonitrile, phenols, silanes with hydroxyl groups, glycidyl-containing compounds, dibasic esters, ethers, glycol ethers, or combinations thereof; optionally
wherein the solvent comprises glycidoxytrimethoxysilane (GTMS).

6. The adhesion promoter composition of any one of claims 2-5, wherein the surfactant comprises an anionic surfactant, a cationic surfactant, or a nonionic surfactant; optionally
wherein the surfactant comprises polyethylene glycol p-(1,1,3,3-tetramethylbutyl)-phenyl ether, a crown ether, a polysorbate, or a combination thereof.

7. The adhesion promoter composition of any one of claims 3-6, wherein the activator comprises ferric chloride, trimethyl borate, titanium tetrachloride, or a combination thereof.

8. The adhesion promoter composition of any one of claims 1-7, wherein the species comprising BHₓ comprises ammonia borane and the solvent comprises 2-phenoxyethanol.

9. A method (200) of providing a stable, surface-modified substrate (130), comprising:
applying an adhesion promoter composition comprising a species comprising BHₓ, and a solvent to a surface of a substrate (130) comprising a polyaryletherketone (PAEK) (202);
allowing the adhesion promoter composition to dwell on the surface for about 5 min to about 72 hours (204);
removing the adhesion promoter composition from the surface by wiping, rinsing (206); and
drying the surface of the PAEK (208).

10. The method (200) of providing a stable, surface-modified substrate (130) of claim 9, further comprising applying a coating to the surface of the substrate (130); optionally
wherein the coating comprises an epoxy, a polyurethane, or a polysulfide.

11. The method (200) of providing a stable, surface-modified substrate (130) of claims 9 or 10, wherein removing the adhesion promoter composition from the surface comprises wiping and/or rinsing (206) using a solvent comprising methyl ethyl ketone (MEK), methyl propyl ketone (MPK), isopropyl alcohol (IPA), acetone, water, propylene glycol propyl ether (PGPE), or a combination thereof.

12. The method (200) of providing a stable, surface-modified substrate (130) of any one of claims 9-11, further comprising heating the adhesion promoter composition up to 100 °C.

13. The method of providing a stable, surface-modified substrate of any one of claims 9-12, wherein the surface has a ratio of C-O:C=O that is higher at a surface depth of up to 10 nm as compared to a bulk of the substrate (130).

14. A stable, surface-activated polymer surface, comprising:
a surface of a substrate (130) comprising a polyaryletherketone (PAEK); and wherein:
the surface has a ratio of C-O:C=O that is higher at a surface depth of up to 10 nm as compared to a bulk of the substrate (130).

15. The stable, surface-activated polymer surface of claim 14, wherein the ratio of C-O:C=O remains stable for about 6 months to about 2 years; and/or
wherein the polyaryletherketone (PAEK) comprises poly-ether-ether-ketone (PEEK) or poly-ether-ketone-ketone (PEKK).
